# FASCICULE DE BREVET EUROPEEN

(11) **EP 1 390 565 B1**
(45) Date de publication et mention de la délivrance du brevet: **11.06.2008**
(21) Numéro de dépôt: 02743345.7
(22) Date de dépôt: 31.05.2002
(51) Int. Cl.: C23C 22/57, C23C 22/34

(54) **COMPOSITION ET PROCEDE POUR LE TRAITEMENT D'ALLIAGES DE MAGNESIUM**
ZUSAMMENSETZUNG UND VERFAHREN ZUR BEHANDLUNG VON MAGNESIUMLEGIERUNGEN
COMPOSITION AND METHOD FOR TREATING MAGNESIUM ALLOYS

(30) Priorité: 31.05.2001 FR 0107173
(43) Date de publication de la demande: 25.02.2004
(73) Titulaire: UNIVERSITE PIERRE ET MARIE CURIE, 75005 Paris (FR)
(72) Inventeur: MARCUS, Philippe, F-75020 Paris (FR); ARDELEAN, Hélène, F-91120 Palaiseau (FR)
(74) Mandataire: Sueur, Yvette
(86) Numéro de dépôt international: PCT/FR2002/001843
(87) Numéro de publication internationale: WO 2002/097164

(56) Documents cités:
- EP-A- 0 969 078
- WO-A-99/60186
- DE-C- 707 722
- US-A- 3 066 055
- US-A- 5 584 944

## Description

La présente invention concerne le traitement d'alliages de magnésium en vue d'améliorer leur résistance à la corrosion.

Les alliages de magnésium présentent un grand intérêt du fait de leur légèreté. Les applications concernent notamment les industries du transport (automobile et aéronautique), le matériel médical et la téléphonie mobile. Un des points faibles de ces matériaux est leur sensibilité à la corrosion. La protection contre la corrosion peut être obtenue par dépôt d'un revêtement ou par traitement de la surface. Les couches protectrices peuvent être réalisées par exemple par conversion chimique, ou par anodisation dans des solutions contenant des sels de métaux et des métalloïde.

Les traitements de conversion sont effectués en immergeant la pièce d'alliage de magnésium à traiter dans une solution oxydante, sans application de courant électrique. Les solutions de traitement le plus communément utilisées dans l'industrie sont des solutions de chromates ou de bichromates alcalins, qui améliorent très sensiblement la résistance à la corrosion des alliages. Ces traitements présentent cependant un inconvénient majeur, dans la mesure où ils font appel à des solutions présentant une toxicité non négligeable, du fait de la présence de Cr^{VI}.

On a alors cherché à remplacer les solutions de chromates ou de bichromates par des solutions moins toxiques. Par exemple, une solution de nitrate de cérium a été utilisée pour traiter des pièces en magnésium pur (H. Ardelean, et al. Proceedings of the 38th Annual Conference of Metallurgists, Symposium on " Environmental Degradation of Materials and Corrosion Control in Metals ", Canada, (1999), Met. Soc., Ed. M. Elboudjdaini et E. Ghali, 1999, pp. 85-103). Par ce traitement, un film contenant de l'oxyde de cérium se forme à la surface du magnésium, et l'on constate une inhibition de la réaction cathodique et une diminution de la dissolution anodique.

I1 est également connu que le traitement par une solution de sel de cérium améliore la résistance à la corrosion des aciers inoxydables (Y.C. Lu, et al., Corrosion Science, vol. 37, N° 1, pp. 145-155, 1995) et de l'aluminium et de ses alliages (A. J. Davenport, et al., Corrosion Science, vol. 32, N° 5/6, p. 653-663, 1991). On sait également que l'immersion d'un composé intermétallique CuMgAl₂ dans une solution de Ce(NO₃)₃ provoque la formation de précipité d'oxyde Al/Ce (J. D. Gorman, et al., Corrosion Science, vol. 38, N°11, pp. 1977-1990, 1996). On connaît en outre le traitement d'un alliage d'aluminium contenant du magnésium, par une solution aqueuse de chlorure de cérium contenant en outre du peroxyde d'hydrogène (A. E. Hughes, et al., Surface and Interface Analysis, vol. 23, 540-550 (1995). Les couches protectrices obtenues présentent cependant quelques inconvénients, dans la mesure où elles sont poreuses et que leur adhérence est insuffisante.

Les inventeurs ont trouvé que, de manière surprenante, l'addition du pentoxyde de niobium à une solution de nitrate de cérium permettait d'obtenir à la surface d'une pièce en alliage de magnésium, une couche protectrice et adhérente, sans utilisation d'espèces toxiques.

C'est pourquoi la présente invention a pour objet une composition pour le traitement de surface d'alliages de magnésium, un procédé de traitement de surface des alliages de magnésium, ainsi que les pièces revêtues des couches protectrices obtenues.

Une composition selon l'invention pour le traitement d'un alliage de magnésium est une solution aqueuse acide contenant du pentoxyde de niobium, un sel de cérium soluble dans l'eau et éventuellement un sel de zirconium. En vue de favoriser la solubilité du pentoxyde de niobium, la composition contient avantageusement de l'acide fluorhydrique.

Dans un mode de réalisation particulier, une composition selon l'invention pour le traitement d'un alliage de magnésium a un pH compris entre 3,2 et 4, de préférence entre 3,3 et 3,4, et elle contient de 0,02 à 0,05 mole/l de pentoxyde de niobium, de 1 à 2,5 ml/l d'acide fluorhydrique, de 0 à 0,1 mole/l de sel de zirconium, de 0,03 à 0,1 mole/l de sel de cérium soluble dans l'eau.

Le nitrate de cérium Ce(NO₃)₃*6H₂O est particulièrement préféré en tant que sel de cérium. L'incorporation des ions nitrates dans la composition ne provoque pas une détérioration du comportement à la corrosion, contrairement aux ions chlore ou sulfate qui altèrent la résistance à la corrosion. En outre, l'introduction d'autres anions peut engendrer des problèmes de complexation et/ou de précipitation.

La composition de traitement contient de préférence en outre un sel de zirconium. Pour les mêmes raisons que ci-dessus, ZrO(NO₃)₂. xH₂O est particulièrement intéressant en tant que sel de zirconium. Lorsque la composition de traitement contient du sel de zirconium, sa concentration est de préférence sensiblement égale à la concentration en sel de cérium.

Il est préférable que la composition de traitement soit sursaturée en pentoxyde de niobium. Le pentoxyde de niobium forme avec l'acide fluorhydrique, des complexes fluoroniobate (fluoroniobyle) qui décomposent l'eau avec dégagement d'hydrogène en s'oxydant sur les sites cathodiques en surface. Les ions de magnésium formés sur les sites anodiques réagissent avec les complexes de niobium ou d'autres espèces intermédiaires pour former, sur la surface de l'alliage de magnésium, un mélange de composés comprenant de l'oxyde de niobium, de l'oxyde de cérium, de l'oxyde de magnésium, éventuellement de l'oxyde de zirconium, éventuellement de l'oxyde d'aluminium, et éventuellement d'autres espèces, par exemple des fluorures.

Une composition de traitement selon l'invention peut contenir en outre d'autres constituants; notamment des composés utilisés pour ajuster le pH à la valeur requise. Parmi ces composés, on préfère tout particulièrement NH₄F. La composition peut en outre contenir des modérateurs d'attaque tel que Al(OH)₃ et AlF₃. Il est noté que NH₄F joue également le rôle de modérateur d'attaque.

Une composition selon l'invention pour le traitement d'une pièce en alliage de magnésium peut être obtenue en introduisant sous agitation dans une solution aqueuse de Nb₂O₅ contenant HF, les autres constituants de la composition de traitement, les quantités des constituants respectifs étant choisies de manière à obtenir les concentrations finales souhaitées, le mélange étant effectué sous agitation, puis en laissant reposer le mélange pendant une durée suffisante (généralement de 24 à 48 heures) afin que les constituants soient dissous.

Dans un mode de réalisation particulier, on prépare une solution aqueuse de chacun des constituants, puis on mélange un volume approprié de chacune des solutions pour obtenir les concentrations finales souhaitées.

Dans un mode de réalisation préféré, une première étape consiste à préparer les solutions primaires suivantes :
- Solution aqueuse de Nb₂O₅ contenant de 0,15 à 0,45 mole/l de pentoxyde et de 15 à 25 ml/l de HF à 48% ;
- Solution aqueuse contenant de 0,15 à 0,75 mole/l d'oxyde de cérium et de 0 à 0,75 mole/l d'oxyde de zirconium ZrO(NO₃)₂*XH₂O;
- Eventuellement une solution destinée à modérer l'action de la composition de traitement, contenant Al(OH)₃ (de préférence 0,15 mole/l) et AlF₃*3H₂O (de préférence 0,09 mole/l.

Une seconde étape du procédé de préparation de la composition de traitement consiste à introduire dans un volume donné d'eau, les quantités appropriées de chacune des solutions primaires de sel de Nb, de Zr et de Ce ci-dessus dans l'ordre dans lequel elles sont citées, une quantité appropriée de NH₄F à 97% cristallisé, et éventuellement une quantité appropriée d'une solution de composés d'aluminium, pour obtenir la composition de traitement souhaitée.

Le procédé selon l'invention pour le traitement de surface d'une pièce en alliage de magnésium consiste à immerger ladite pièce dans une composition de traitement selon l'invention.

Avant l'immersion de la pièce à traiter dans la composition de traitement, il est préférable de la soumettre à un traitement préliminaire visant à nettoyer la surface. Le traitement préliminaire peut consister en un nettoyage mécanique avec des disques abrasifs SiC, suivi d'un dégraissage dans une solution de phosphate et de carbonate à chaud, puis d'un décapage dans une solution diluée d'acide phosphorique et fluorhydrique.

Durant l'immersion de la pièce d'alliage de magnésium dans la composition de traitement, les espèces protectrices précipitent et se déposent à la surface de la pièce. Il est préférable au cours de cette étape, d'agiter la composition de traitement et la pièce et de maintenir l'ensemble à une température comprise entre 20 et 30°C. Il est particulièrement avantageux d'opérer à la température ambiante. La durée d'immersion est comprise entre 3 h et 24 h. Une durée d'environ 3 heures est en général suffisante. En vue de faciliter l'apport d'oxygène à la surface de la pièce à traiter, il est recommandé d'extraire la pièce de la composition à plusieurs reprises au cours du traitement.

La couche obtenue à la surface de la pièce d'alliage de magnésium traitée par immersion dans une composition de traitement de l'invention est poreuse. Il est donc souhaitable d'ajouter une seconde étape au traitement de la pièces, en vue de colmater les pores. Cette étape de colmatage peut être effectuée en laissant reposer à l'air la pièce extraite de la solution, puis en effectuant une succession de cycles "immersion dans la composition de traitement/repos à l'air", puis un recuit à faible température pendant quelques heures. Lors des cycles "immersion/repos", la durée de l'immersion est de quelques secondes, et la durée des périodes de repos à l'air est de préférence de 20 à 45 min. Le recuit est avantageusement effectué à une température entre 75 et 175 °C, de préférence à 150°C sous oxygène pendant quelques heures.

Une pièce d'alliage de magnésium traitée selon le procédé de l'invention comprend à sa surface une couche dense homogène comprenant un mélange de composés comprenant de l'oxyde de niobium, de l'oxyde de cérium, de l'oxyde de magnésium, éventuellement de l'oxyde de zirconium, éventuellement de l'oxyde d'aluminium, et éventuellement d'autres espèces, par exemple des fluorures (fluorure de magnésium ou fluorure complexe tel que par exemple le fluorure de niobyle). Cette couche présente une bonne adhérence au substrat d'alliage de magnésium..Elle peut être caractérisée par voltampérométrie, par spectroscopie d'impédance, par spectroscopie de photoélectrons (XPS).

Les pièces d'alliage de magnésium traitées selon le procédé de l'invention présentent, par rapport à une pièce non traitée, une résistance à la corrosion améliorée. Cette amélioration se traduit par un déplacement du potentiel de corrosion d'environ 150 - 220 mV vers des valeurs plus positive, et une diminution importante des courants de dissolution anodique et de corrosion. La présence du nitrate de zirconyle dans la composition de traitement contribue à la diminution des courants de dissolution anodique et de corrosion et provoque le déplacement du potentiel de corrosion d'environ 150 mV vers des valeurs plus positives.

Pour vérifier l'amélioration de la résistance à la corrosion obtenue sur les pièces d'alliage de magnésium traitées selon le procédé de l'invention, les échantillons ont été soumis à la voltampérométrie et à la spectroscopie d'impédance dans un milieu agressif (par exemple dans une solution, à 0,5 mole/l de Na₂SO₄ sous polarisation). Les courbes représentant la variation du courant en fonction du potentiel en milieu corrosif montrent un déplacement du potentiel de corrosion vers les valeurs plus positives et une diminution importante des courants de corrosion et de dissolution anodique, par rapport à l'alliage non traité. Ces résultats sont confirmés par la spectroscopie d'impédance, qui indique une meilleure résistance à la corrosion pour nos couches.

Les couches de mélanges de composés formées sur l'alliage de magnésium après traitement par la composition de l'invention peuvent servir de couches de protection temporaire ou de supports pour une peinture.

La présente invention est décrite plus en détail à l'aide des exemples suivants, auxquels elle n'est cependant pas limitée.

### Exemple 1

### Préparation d'une composition de traitement

On a tout d'abord préparé des solutions aqueuses pour chacun des constituants de la composition de traitement. Les concentrations des diverses solutions aqueuses sont données ci-dessous.

| Solution | Constituant | Concentration |
|---|---|---|
| 1 | Nb₂O₅ | 0,45 mole/l |
| | HF à 48% | 25 ml/l |
| 2 | ZrO(NO₃)₂, x H₂O | 0, 75 mole/l |
| 3 | Ce (NO₃)₃, 6 H₂O | 0,75 mole/l |

On a ensuite mélangé 8 volumes d'eau et un volume de chacune des solutions 1 à 3 dans l'ordre où elles figurent dans le tableau, et on a soumis le mélange à une agitation magnétique pendant 15 min. On a ensuite ajusté le pH à une valeur entre 3,3 et 3,4 à l'aide d'une quantité appropriée de composé cristallin NH₄F à 97%.

Les concentrations des divers constituants dans la composition finale ainsi obtenues sont les suivantes :

| | |
|---|---|
| HF à 48% | 2,27 ml/l |
| Nb₂O₅ | 0,04 mole/l |
| ZrO(NO₃)₂, x H₂O | 0,068 mole/l |
| Ce (NO₃)₃, 6 H₂O | 0,068 mole/l |
| NH₄F (97%) cristallisé | ≈11,2 g/l (≈0,3 mole/l) |

### Exemple 2

### Préparation d'une composition de traitement

On a tout d'abord préparé des solutions aqueuses pour chacun des constituants de la composition de traitement. Les concentrations des diverses solutions aqueuses sont données ci-dessous.

| Solution | Constituant | Concentration | v |
|---|---|---|---|
| 1 | Nb₂O₅ | 0,45 mole/l | 1 |
| | HF à 48% | 25 ml/l | |
| 2a | ZrO(NO₃)₂, x H₂O | 0,75 mole/l | 2 |
| | Ce(NO₃)₃, 6 H₂O | 0,75 mole/l | |
| 3a | Al(OH)₃ | 0,15 mole/l | 0,25 |
| | AlF₃*3H₂O | 0,09 mole/l | |

On a ensuite mélangé 8 volumes d'eau et des parties en volume v telles qu'indiquées dans le tableau ci-dessus de chacune des solutions 1, 2a et 3a, dans l'ordre où ces solutions sont mentionnées dans le tableau, et on a soumis le mélange à une agitation magnétique pendant 15 min. On a ensuite ajusté le pH à une valeur entre 3,3 et 3,4 à l'aide d'une quantité appropriée de NH₄F à 97% cristallisé.

Les concentrations des divers constituants dans la composition finale ainsi obtenues sont les suivantes :

| | |
|---|---|
| HF à 48% | 2,25 ml/l |
| Nb₂O₅ | 0,04 mole/l |
| ZrO(NO₃)₂, x H₂O | 0,067 mole/l |
| Ce(NO₃)₃, 6 H₂O | 0,067 mole/l |
| Al(OH)₃ | 0,003 mole/l |
| AlF₃*3H₂O | 0,002 mole/l |
| NH₄F (à 97%) | ≈11,1 g/l (≈0,3ml). |

### Exemple 3

### Traitement d'un alliage

On a traité un alliage de magnésium AZ91D à l'aide de la composition obtenue dans l'exemple 1. L'alliage AZ91D est un alliage de magnésium contenant 9% d'aluminium et 1% de zinc.

Un échantillon d'alliage AZ91D a été immergé dans une composition obtenue conformément au mode opératoire décrit ci-dessus, à température ambiante, en maintenant une agitation. Toutes les 40 min environ, l'échantillon a été extrait de la composition puis immergé aussitôt. Après 3 heures, l'échantillon a été extrait de la composition, et colmaté pendant environ 3 à 5 heures par repos à l'air et reimmersion toutes les 20 min dans la solution de traitement, ensuite rincé à l'eau, séché à l'air et recuit à 150°C pendant quelques heures sous oxygène.

### Caractérisation de l'échantillon traité

L'échantillon traité a été soumis à une analyse XPS. Les résultats montrent la présence de ZrO₂ (≈ 40 % at.), CeO₂ (≈ 21 % at.), MgF₂ (≈ 10 % at.), MgO (≈ 16 % at.), Mg(OH)₂ (≈ 8 % at.), Nb₂O₅ et NbOₓFy (≈ 5 % at.), dans la couche de revêtement formée à la surface de l'échantillon.

L'échantillon traité et un alliage non traité ont été soumis à la voltampérométrie et à la spectroscopie d'impédance dans un milieu corrosif constitué par une solution à 0,5 mole/l de Na₂SO₄ sous polarisation. Les courbes représentant la variation du courant en fonction du potentiel montrent un déplacement du potentiel de corrosion vers les valeurs plus positives et une diminution importante des courants de corrosion et de dissolution anodique, pour l'alliage traité par rapport à l'alliage non traité.

## Revendications

1. Composition pour le traitement **de surface** d'un alliage de magnésium, **caractérisée en ce qu'elle** est constituée par une solution aqueuse acide contenant du pentoxyde de niobium, un sel de cérium soluble dans l'eau et éventuellement un sel de zirconium.

2. Composition selon la revendication 1, **caractérisée en ce qu'elle** contient en outre de l'acide fluorhydrique.

3. Composition selon la revendication 1, **caractérisé en ce qu'elle** est constituée par une solution aqueuse dont le pH est compris entre 3,2 et 4 et qui continent :
- de 0,02 à 0,05 mole/l de pentoxyde de niobium,
- de 1 à 2,5 ml/l d'acide fluorhydrique,
- de 0 à 0,1 mole/l de sel de zirconium,
- de 0,03 à 0,1 mole/l de sel de cérium soluble dans l'eau.

4. Composition selon la revendication 1, **caractérisée en ce que** le sel de cérium est le nitrate de cérium Ce(NO₃)₃*6H₂O.

5. Composition selon la revendication 1, **caractérisé en ce que** le sel de zirconium est ZrO(NO₃)₂. xH₂O.

6. Composition selon la revendication 1, **caractérisé en ce que** le rapport molaire sel de cérium/sel de zirconium est égal à 1.

7. Composition selon la revendication 1, **caractérisée en ce qu'elle** contient en outre du fluorure d'ammonium.

8. Composition selon la revendication 1, **caractérisée en ce qu'**elle contient en outre un agent modérateur d'attaque, choisi parmi Al(OH)₃ et AlF₃.

9. Composition selon la revendication 1, **caractérisée en ce que** la solution est sursaturée en pentoxyde de niobium.

10. Procédé de préparation d'une composition selon la revendication 1, pour le traitement **de surface** d'un alliage de magnésium, **caractérisé en ce qu'il** consiste à introduire sous agitation dans une solution aqueuse de Nb₂O₅ contenant HF, les autres constituants de la composition de traitement, les quantités des constituants respectifs étant choisies de manière à obtenir les concentrations finales souhaitées, le mélange étant effectué sous agitation, puis à laisser reposer le mélange jusqu'à dissolution des constituants.

11. Procédé selon la revendication 10, **caractérisé en ce que** l' on prépare une solution aqueuse de chacun des constituants, puis on mélange un volume approprié de chacune des solutions pour obtenir les concentrations finales souhaitées.

12. Procédé selon la revendication 11, **caractérisé en ce que**, dans une première étape, on prépare les solutions primaires suivantes :
● solution aqueuse de Nb₂O₅ contenant de 0,15 à 0,45 mole/l de pentoxyde et de 15 à 25 ml/l de HF à 48% ;
● solution aqueuse contenant de 0,15 à 0,75 mole/l d'oxyde de cérium et de 0 à 0,75 mole/l d'oxyde de zirconium ZrO (NO₃) ₂*XH₂O ;
● éventuellement une solution contenant 0,15 mole/l de Al(OH)₃ et 0,09 mole/l de AlF₃*3H₂O ;
et au cours d'une seconde étape on introduit dans un volume donné d'eau, les quantités appropriées de chacune des solutions primaires de sel de Nb, de Ce et de Zr, (dans l'ordre où elles sont citées), une quantité appropriée de NH₄F à 97% cristallisé, et éventuellement une quantité appropriée de solution de composés d'aluminium, pour obtenir la composition de traitement souhaitée.

13. Procédé de traitement de surface d'une pièce en alliage de magnésium, consistant à tremper ladite pièce dans une composition de traitement, **caractérisé en ce que** la composition de traitement est une composition selon l'une des revendications 1 à 9.

14. Procédé selon la revendication 13, **caractérisé en ce que** la pièce en alliage de magnésium est soumise à un traitement préliminaire visant à nettoyer la surface

15. Procédé selon la revendication 13, **caractérisé en ce que** la composition de traitement est agitée et maintenue à une température comprise entre 20 et 30°C pendant l'immersion de la pièce à traiter.

16. Procédé selon la revendication 13, **caractérisé en ce** la pièce à traiter est soumise à un traitement complémentaire consistant à effectuer une succession de cycles "immersion dans la composition de traitement/repos à l'air", puis un recuit, la durée des périodes d'immersion étant de quelques secondes, et la durée des périodes de repos à l'air étant de 20 à 45 min.

17. Procédé selon la revendication 16, **caractérisé en ce que** le recuit est effectué à une température entre 75 et 175 °C sous oxygène.

18. Pièce en alliage de magnésium revêtue d'une couche protectrice obtenue par le procédé selon la revendication 13, **caractérisée en ce qu'elle** est homogène et dense, et **en ce qu'**elle comprend un mélange de composés comprenant de l'oxyde de niobium, de l'oxyde de cérium, de l'oxyde de magnésium, éventuellement de l'oxyde de zirconium, éventuellement de l'oxyde d'aluminium, et éventuellement du fluorure de magnésium et/ou un fluorure de niobyle.

## Claims

1. A composition for the surface treatment of a magnesium alloy, **characterized in that** it is formed by an aqueous acid solution containing niobium pentoxide, a water-soluble cerium salt and optionally a zirconium salt.

2. The composition as claimed in claim 1, **characterized in that** it furthermore contains hydrofluoric acid.

3. The composition as claimed in claim 1, **characterized in that** it is formed by an aqueous solution having a pH between 3.2 and 4, which composition contains:
- from 0.02 to 0.05 mol/l of niobium pentoxide;
- from 1 to 2.5 ml/l of hydrofluoric acid;
- from 0 to 0.1 mol/l of a zirconium salt; and
- from 0.03 to 0.1 mol/l of a water-soluble cerium salt.

4. The composition as claimed in claim 1, **characterized in that** the cerium salt is cerium nitrate Ce(NO₃)₃·6H₂O.

5. The composition as claimed in claim 1, **characterized in that** the zirconium salt is ZrO(NO₃)_{2·}xH₂O.

6. The composition as claimed in claim 1, **characterized in that** the cerium salt/zirconium salt molar ratio is equal to 1.

7. The composition as claimed in claim 1, **characterized in that** it furthermore contains ammonium fluoride.

8. The composition as claimed in claim 1, **characterized in that** it furthermore contains a corrosion moderator chosen from Al(OH)₃ and AlF₃.

9. The composition as claimed in claim 1, **characterized in that** the solution is supersaturated with niobium pentoxide.

10. A process for preparing a composition as claimed in claim 1, for the surface treatment of a magnesium alloy, **characterized in that** it consists in introducing, with stirring, into an aqueous Nb₂O₅ solution containing HF, the other constituents of the treatment composition, the amounts of the respective constituents being chosen so as to obtain the desired final concentrations, the mixture being stirred and then left to rest until dissolution of the constituents.

11. The process as claimed in claim 10, **characterized in that** an aqueous solution of each of the constituents is prepared and then an appropriate volume of each of the solutions is mixed together in order to obtain the desired final concentrations.

12. The process as claimed in claim 11, **characterized in that**, in a first step, the following primary solutions are prepared:
● an aqueous Nb₂O₅ solution containing from 0.15 to 0.45 mol/l of pentoxide and from 15 to 25 ml/l of 48% HF;
● an aqueous solution containing from 0.15 to 0.75 mol/l of cerium oxide and from 0 to 0.75 mol/l of zirconium oxide ZrO(NO₃)₂·xH₂O; and
● optionally a solution, containing 0.15 mol/l of Al(OH)₃ and 0.09 mol/l of AlF₃·3H₂O;
and during a second step, the appropriate amounts of each of the Nb, Ce and Zr primary salt solutions (in the order in which they are mentioned), an appropriate amount of crystallized 97% NH₄F and, optionally, an appropriate amount of a solution of aluminum compounds are introduced into a given volume of water in order to obtain the desired treatment composition.

13. A process for surface treating a magnesium alloy workpiece, consisting in immersing said workpiece in a treatment composition, **characterized in that** the treatment composition is a composition as claimed in one of claims 1 to 9.

14. The process as claimed in claim 13, **characterized in that** the magnesium alloy workpiece undergoes a preliminary treatment for the purpose of cleaning the surface.

15. The process as claimed in claim 13, **characterized in that** the treatment composition is stirred and maintained at a temperature of between 20 and 30°C while the workpiece to be treated is immersed.

16. The process as claimed in claim 13, **characterized in that** the workpiece to be treated undergoes a complementary treatment consisting in carrying out a succession of "immersion in the treatment composition / resting in air" cycles followed by annealing, the duration of the immersion periods being a few seconds and the duration of the resting periods in air being 20 to 45 minutes.

17. The process as claimed in claim 16, **characterized in that** the annealing is carried out at a temperature between 75 and 175°C in oxygen.

18. A magnesium alloy workpiece coated by a protective coating obtained by the process as claimed in claim 1, **characterized in that** it is uniform and dense and **in that** it comprises a mixture of compounds including niobium oxide, cerium oxide, magnesium oxide, optionally zirconium oxide, optionally aluminum oxide and optionally magnesium fluoride and/or a niobyl fluoride.

## Patentansprüche

1. Zusammensetzung zur Oberflächenbehandlung einer Magnesiumlegierung, **dadurch gekennzeichnet, dass** sie aus einer sauren wässrigen Lösung besteht, die Niobpentoxid, ein wasserlösliches Cersalz und gegebenenfalls ein Zirconiumsalz enthält.

2. Zusammensetzung nach Anspruch 1, **dadurch gekennzeichnet, dass** sie weiters Fluorwasserstoffsäure enthält.

3. Zusammensetzung nach Anspruch 1, **dadurch gekennzeichnet, dass** sie aus einer wässrigen Lösung besteht, deren pH im Bereich von 3,2 bis 4 liegt und die Folgendes enthält:
- 0,02 bis 0,05 mol/l Niobpentoxid,
- 1 bis 2,5 ml/l Fluorwasserstoffsäure,
- 0 bis 0,1 mol/l Zirconiumsalz,
- 0,03 bis 0,1 mol/l wasserlösliches Cersalz.

4. Zusammensetzung nach Anspruch 1, **dadurch gekennzeichnet, dass** das Cersalz Cernitrat Ce(NO₃)₃·6H₂O ist.

5. Zusammensetzung nach Anspruch 1, **dadurch gekennzeichnet, dass** das Zirconiumsalz ZrO(NO₃)₂·xH₂O ist.

6. Zusammensetzung nach Anspruch 1, **dadurch gekennzeichnet, dass** das Molverhältnis zwischen Cersalz und Zirconiumsalz 1 beträgt.

7. Zusammensetzung nach Anspruch 1, **dadurch gekennzeichnet, dass** sie weiters Ammoniumfluorid enthält.

8. Zusammensetzung nach Anspruch 1, **dadurch gekennzeichnet, dass** sie weiters ein Angriffe abschwächendes Mittel enthält, das aus Al(OH)₃ und AIF₃ ausgewählt ist.

9. Zusammensetzung nach Anspruch 1, **dadurch gekennzeichnet, dass** die Lösung an Niobpentoxid übersättigt ist.

10. Verfahren zur Herstellung einer Zusammensetzung nach Anspruch 1 zur Oberflächenbehandlung einer Magnesiumlegierung, **dadurch gekennzeichnet, dass** es darin besteht, die anderen Komponenten der Behandlungszusammensetzung unter Rühren in eine wässrige Nb₂O₅-Lösung, die HF enthält, einzuführen, wobei die Menge der jeweiligen Komponenten so gewählt wird, dass die gewünschten Endkonzentrationen erhalten werden, wobei Durchmischung durch Rühren erfolgt, und das Gemisch dann bis zum Auflösen der Komponenten ruhen zu lassen.

11. Verfahren nach Anspruch 10, **dadurch gekennzeichnet, dass** eine wässrige Lösung jeder der Komponenten hergestellt wird und dann ein geeignetes Volumen jeder der Lösungen vermischt wird, um die gewünschten Endkonzentrationen zu erhalten.

12. Verfahren nach Anspruch 11, **dadurch gekennzeichnet, dass** in einem ersten Schritt folgende Primärlösungen hergestellt werden:
● eine wässrige Nb₂O₅-Lösung, die 0,15 bis 0,45 mol/l Pentoxid und 15 bis 25 ml/l 48%ige HF enthält;
● eine wässrige Lösung, die 0,15 bis 0,75 mol/l Ceroxid und 0 bis 0,75 mol/l Zirconiumoxid ZrO(NO₃)₂·xH₂O enthält;
● gegebenenfalls eine Lösung, die 0,15 mol/l AI(OH)₃ und 0,09 mol/l AIF₃·3H₂O enthält;
und dass in einem zweiten Schritt die geeigneten Mengen jeder Primärlösung des Nb-, des Ce- und des Zr-Salzes (in der angegebenen Reihenfolge), eine geeignete Menge an zu 97 % kristallisiertem NH₄F und gegebenenfalls eine geeignete Menge der Lösung der Aluminiumverbindungen in ein bestimmtes Wasservolumen eingeführt werden, um die gewünschte Behandlungszusammensetzung zu erhalten.

13. Verfahren zur Oberflächenbehandlung eines Gegenstands aus einer Magnesiumlegierung, das darin besteht, den Gegenstand in eine Behandlungszusammensetzung einzutauchen, **dadurch gekennzeichnet, dass** die Behandlungszusammensetzung eine Zusammensetzung nach einem der Ansprüche 1 bis 9 ist.

14. Verfahren nach Anspruch 13, **dadurch gekennzeichnet, dass** der Magnesiumlegierungsgegenstand einer Vorbehandlung zur Reinigung der Oberfläche unterzogen wird.

15. Verfahren nach Anspruch 13, **dadurch gekennzeichnet, dass** die Behandlungszusammensetzung während des Eintauchens des zu behandelnden Gegenstands gerührt und auf einer Temperatur zwischen 20 und 30 °C gehalten wird.

16. Verfahren nach Anspruch 13, **dadurch gekennzeichnet, dass** der zu behandelnde Gegenstand einer Ergänzungsbehandlung unterzogen wird, die darin besteht, eine Abfolge von Zyklen "Eintauchen in die Behandlungszusammensetzung / Ruhen an der Luft" und ein anschließendes Backen durchzuführen, wobei die Dauer der Eintauchphasen einige Sekunden und die Dauer der Ruhephasen an der Luft 20 bis 45 min betragen.

17. Verfahren nach Anspruch 16, **dadurch gekennzeichnet, dass** das Backen bei einer Temperatur zwischen 75 und 175 °C unter Sauerstoff durchgeführt wird.

18. Magnesiumlegierungsgegenstand, der mit einer Schutzschicht beschichtet ist, die durch ein Verfahren nach Anspruch 13 erhalten wurde, **dadurch gekennzeichnet ist, dass** diese homogen und dicht ist und ein Verbindungsgemisch umfasst, das Nioboxid, Ceroxid, Magnesiumoxid, gegebenenfalls Zirconiumoxid, gegebenenfalls Aluminiumoxid und gegebenenfalls Magnesiumfluorid und/oder Niobylfluorid umfasst.
